**Europäisches Patentamt**

**European Patent Office**

**Office européen des brevets**

(11) Veröffentlichungsnummer: **0 139 834**
A2

## (12) EUROPÄISCHE PATENTANMELDUNG

(21) Anmeldenummer: **84106840.6**

(22) Anmeldetag: **15.06.84**

(51) Int. Cl.⁴: **H 01 M 2/04**
    **H 01 M 2/06**

(30) Priorität: **30.09.83 DE 3335459**

(43) Veröffentlichungstag der Anmeldung:
**08.05.85 Patentblatt 85/19**

(84) Benannte Vertragsstaaten:
**AT BE DE FR GB IT NL SE**

(71) Anmelder: **VARTA Batterie Aktiengesellschaft**
**Am Leineufer 51**
**D-3000 Hannover 21(DE)**

(72) Erfinder: **Prange, Rolf**
**Brabeckstrasse 27**
**D-5860 Iserlohn(DE)**

(74) Vertreter: **Kaiser, Dieter Ralf, Dipl.-Ing.**
**Gundelhardtstrasse 72**
**D-6233 Kelkheim/Ts.(DE)**

(54) **Deckel für Akkumulatoren.**

(57) Der Deckel 1 eines Akkumulators, welcher durch bloßes Stecken in das Zellengefäß eingesetzt und mittels Dichtlippen 7 gegen dieses abgedichtet ist, wird durch einen Spannring 6, der in eine Ringnut 3 des Poles 2 eingreift, in seiner korrekten Lage arretiert und vor einem Verrutschen nach oben gesichert. Diese Sicherung erlaubt es auch, Zellenverschlüsse aus Stecköffnungen 11 herauszunehmen, ohne daß Gefahr eines gleichzeitigen Mithochziehens des Deckels besteht. Bei vergossenen Deckeln ist eine entsprechende Arretierung ebenfalls vorteilhaft.

Fig. 1

EP 0 139 834 A2

## Deckel für Akkumulatoren

Die Erfindung betrifft einen Deckel für Akkumulatorenzellen, insbesondere von Bleiakkumulatoren, welcher mit dem Zellengehäuse lösbar verbunden ist.

Bei modernen Akkumulatoren mit Kunststoffgehäusen, wie sie beispielsweise als Starterbatterien in Kraftfahrzeugen oder in der Elektrotraktion eingesetzt werden, sind Deckel und Behälter gewöhnlich miteinander verschweißt. Damit ist einerseits ein sehr hohes Maß an Sicherheit gegen Elektrolytaustritt gegeben, andererseits bleibt ein Zugang zum Elektrolytraum und zu den Elektrodenplatten auf den Füllstutzen und auf gegebenenfalls vorhandene Diagnoseöffnungen im Deckelbereich beschränkt. Wegen der weit vorangetriebenen Wartungsfreiheit solcher Akkumulatoren ist die gute Zugänglichkeit zu ihrem Innern jedoch kein dringendes Erfordernis.

Es gibt allerdings zahlreiche Anwendungsfälle, sowohl im stationären als auch im Fahrzeugzellenbereich, bei denen vergossene oder gesteckte Deckel zur Anwendung kommen. Beide Arten sind grundsätzlich von dem Behälter lösbar und bieten die Möglichkeit, bei Störungen eine schnelle Reparatur vor Ort vorzunehmen.

Eine bekannte Zellenausführung mit gestecktem Deckel (auch Doppelzungendeckel genannt) ist z.B. dem deutschen Gebrauchsmuster 1 630 444 zu entnehmen. Solche Deckel weisen den Nachteil auf, daß sie nur geringe Ansprüche bezüglich der Dichtheit der Poldurchführung befriedigen können. Darüber hinaus wandern die Deckel bei Erschütterungen im Betrieb nach oben, so daß die Dichtlippen, die den Deckel zum Gefäß abdichten sollen, ihre Funktion nicht mehr erfüllen können. Ein regelmäßiges Niederdrücken des Deckels ist notwendig.

Der Erfindung liegt daher die Aufgabe zugrunde, einen Zellendeckel der eingangs genannten Gattung anzugeben, der den gewachsenen Ansprüchen an Dichtheit sowie den Wünschen nach einer Verringerung des allgemeinen Wartungsaufwandes genügt.

2

Z

**0139834**

Die Aufgabe wird erfindungsgemäß dadurch gelöst, daß der Deckel durch einen in den Pol eingreifenden Spannring fixiert und in seiner Lage gehalten ist.

Besonders vorteilhaft ist die Erfindung bei den auswechselbaren Steckdeckeln anwendbar. Aber auch bei vergossenen Deckelausführungen ist es von großem Vorteil, wenn etwa während des Wiederaufschmelzens der Vergußmasse der Deckel bis zum geeigneten Augenblick der Demontage sicher gehaltert ist.

Anhand der Figuren wird die Erfindung näher beschrieben.

Figur 1 zeigt einen erfindungsgemäß an einem zugehörigen Zellenpol arretierten Steckdeckel.

Figur 2 zeigt einen erfindungsgemäßen Spannring.

Figur 3 zeigt einen an einem zugehörigen Zellenpol arretierten Vergußdeckel.

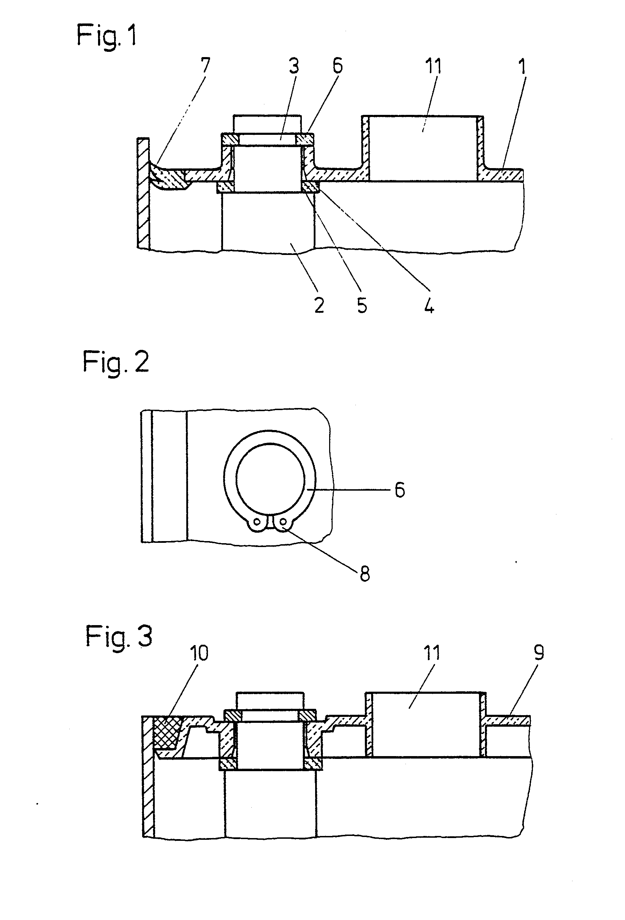

Nach Figur 1 ist der Deckel 1 mit einem abgestuften Pol 2 kombiniert, der im oberen Durchführungsbereich eine Ringnut 3 aufweist. Der Deckel stützt sich auf eine unterlegte oder angespritzte Dichtschnur 4 auf der Polabstufung 5 ab und wird durch einen Spannring 6, der in die Ringnut eingreift, vorgespannt und gehalten. Dem Deckel ist damit die Möglichkeit genommen, nach oben zu wandern. Durch die feste Positionierung der Dichtlippen 7 ergibt sich eine erheblich verbesserte Dichtheit im Vergleich zu herkömmlichen Ausführungen.

Der Spannring ist nach Figur 2 mit einer Montagehilfe 8 versehen. Er ist wieder lösbar, so daß auch der Deckel wie bisher abgehoben werden kann.

Die erfindungsgemäße Fixierung des Deckels 9 mit dem Verguß 10 nach Figur 3 entspricht ganz der für den Steckdeckel 1 beschriebenen Weise. Beide Deckel sind vorteilhaft noch mit Stecköffnungen 11 versehen, in welche entsprechende steckbare Zellenverschlüsse eingesetzt werden können. Obwohl Steckverschlüsse dieser Art vor allem bei den Fahrzeugbatterien zunehmende Verbreitung gefunden haben, blieben sie

0139834

dadurch problematisch, daß beim Ziehen des Zellenverschlusses unbeabsichtigt auch der Deckel mit hochgezogen wurde. Von diesem Nachteil waren naturgemäß Steckdeckel besonders betroffen.

Die erfindungsgemäße Ausführung durch den mit Spannring gesicherten Deckel verhindert ein Hochziehen und gewährt damit eine sichere Handhabung und Funktion des Zellenverschlusses.

**0139834**

Reg.-Nr. HP 433-DT                    6233 Kelkheim, d.27.09.83

TAP-Dr.Ns/sd

VARTA Batterie Aktiengesellschaft

3000 Hannover 21, Am Leineufer 51

-----------------------------------

## Patentansprüche

1. Deckel für Akkumulatorenzellen, insbesondere von Bleiakkumulatoren, welcher mit dem Zellengehäuse lösbar verbunden ist, dadurch gekennzeichnet, daß der Deckel (1) durch einen in den Pol (2) eingreifenden (6) Spannring fixiert und in seiner Lage gehalten ist.

2. Deckel nach Anspruch 1, dadurch gekennzeichnet, daß er ein Steckdeckel ist.

3. Deckel nach Anspruch 1, dadurch gekennzeichnet, daß er mit dem Zellengehäuse vergossen ist.

4. Deckel nach einem der Ansprüche 1 bis 3, dadurch gekennzeichnet, daß er eine Stecköffnung (11) für einen Zellenverschluß besitzt.

C139834

Fig. 1

Fig. 2

Fig. 3